Europäisches Patentamt

European Patent Office

Office européen des brevets

(19)

(11) Veröffentlichungsnummer: **0 139 951**
**A1**

(12) **EUROPÄISCHE PATENTANMELDUNG**

(21) Anmeldenummer: 84109705.8

(22) Anmeldetag: 15.08.84

(51) Int. Cl.⁴: **F 01 P 7/16**
G 05 D 23/19, H 02 K 7/06

(30) Priorität: 09.09.83 DE 3332587

(43) Veröffentlichungstag der Anmeldung:
08.05.85 Patentblatt 85/19

(84) Benannte Vertragsstaaten:
BE DE FR GB IT LU NL SE

(71) Anmelder: Behr-Thomson Dehnstoffregler GmbH
Enzstrasse 25
D-7014 Kornwestheim(DE)

(72) Erfinder: Saur, Roland, Dipl.-Ing.
Niersteiner Strasse 43
D-7000 Stuttgart 31(DE)

(74) Vertreter: Wilhelm, Hans-Herbert, Dr.-Ing. et al,
Patentanwälte Dr.-Ing. Hans-Herbert Wilhelm Dipl.-Ing.
Hanjörg Dauster Gymnasiumstrasse 31B
D-7000 Stuttgart 1(DE)

(54) Vorrichtung zum Regeln der Temperatur in einem Kühlkreislauf eines Verbrennungsmotors.

(57) Bei einer Vorrichtung zum Regeln der Temperatur in einem Kühlkreislauf eines Verbrennungsmotors, insbesondere eines Kraft – fahrzeugmotors, die ein Thermostatventil enthält, das den Kühlmittelfluß von dem Verbrennungsmotor durch einen direkten Rücklauf hindurch und/oder einen Wärmetauscher hindurch zurück zum Verbrennungsmotor regelt und das ein thermostatisches Arbeitselement enthält, dessen Gehäuse einen Ventilteller eines zu dem Wärmetauscher führenden Ventils trägt und dessen bei Erwärmung ausfahrender Arbeitskolben an einem Widerlager abgestützt ist, wird vorgesehen, daß der Arbeitskolben und das Widerlager einen Verstellmechanismus bilden, und daß ein den Arbeitskolben zwangsweise in eine eingeregelte Position überführendes Stellglied an den Arbeitskolben oder das Widerlager angeschlossen ist.

Fig. 1

INCOMPLETE DOCUMENT

Vorrichtung zum Regeln der Temperatur in einem Kühlkreislauf
eines Verbrennungsmotors

==================================================================

Die Erfindung betrifft eine Vorrichtung zum Regeln der Temperatur
in einem Kühlkreislauf eines Verbrennungsmotors, insbesondere eines Kraftfahrzeugmotors, die ein Thermostatventil enthält, das
den Kühlmittelfluß von dem Verbrennungsmotor durch einen direkten
Rücklauf hindurch und/oder einen Wärmetauscher hindurch zurück zum
Verbrennungsmotor regelt und das ein thermostatisches Arbeitselement enthält, dessen Gehäuse einen Ventilteller eines zu dem Wärmetauscher führenden Ventils trägt und dessen bei Erwärmung ausfahrender Arbeitskolben an einem Widerlager abgestützt ist.

Um die Kühlwassertemperatur eines Verbrennungsmotors, insbesondere
eines Kraftfahrzeugmotors zu regeln, ist es seit langem bekannt,
Thermostatventile zu verwenden. Diese Thermostatventile werden so
eingestellt, daß sie ab einer bestimmten, unterhalb der Betriebstemperatur liegenden Temperatur die Verbindung zu dem Wärmetauscher
freigeben, so daß der Verbrennungsmotor in möglichst kurzer Zeit
auf seine Betriebstemperatur erwärmt wird. Die Außentemperatur hat
einen wesentlichen Einfluß auf die Aufwärmezeit, da bei hoher
Außentemperatur die Betriebstemperatur des Verbrennungsmotors
schneller erreicht wird als bei niedriger Außentemperatur. Ein
Thermostatventil, das bei einer zu tief unterhalb der Betriebstemperatur liegenden Temperatur öffnet, verzögert insbesondere bei
niedrigen Außentemperaturen das Erreichen der Betriebstemperatur
des Verbrennungsmotors. Bei niedrigen Außentemperaturen ist es deshalb erwünscht, daß das Thermostatventil erst bei einer höheren,
näher an der Betriebstemperatur liegenden Temperatur öffnet. Bei
hohen Außentemperaturen soll das Thermostatventil dagegen schon
bei einer deutlich niedrigeren Temperatur öffnen, damit die Betriebstemperatur des Motors anschließend nicht überschritten wird.

Die Auswahl der Öffnungstemperatur stellt in der Praxis deshalb einen Kompromiss dar, die möglichst allen Außentemperaturen gerecht werden soll. Diese Öffnungstemperatur wird üblicherweise in dem Herstellerwerk über das Widerlager justiert, das dann in der justierten Position gesichert wird. Dabei ist es beispielsweise bekannt (DE-OS 25 32 057), den Arbeitskolben mit einem Außengewinde zu versehen und in eine als Widerlager dienende Mutter einzuschrauben, die in einem Bügel stationär gehalten ist. Nach dem Justieren auf die gewünschte Öffnungstemperatur wird die als Widerlager dienende Mutter justiert, beispielsweise durch eine Kontermutter oder auch durch Verstemmen des Gewindes.

In der Praxis besteht seit langem der Wunsch, ein Thermostatventil so auszulegen, daß es den Außentemperaturen angepaßt ist, d.h. bei niedrigen Außentemperaturen bei einer höheren Temperatur öffnet als bei höheren Außentemperaturen. Um dieses Bedürfnis zu erfüllen, wurde früher vorgesehen, daß für niedrige Außentemperaturen sogenannte Winter-Thermostatventile und für höhere Außentemperaturen sogenannte Sommer-Thermostatventile eingebaut wurden. Dies führt jedoch zu einem zusätzlichen Wartungsvorgang und vor allem bei einer nicht korrekten Wahl des Thermostatventils zu der Gefahr von Motorschäden.

Um das geschilderte Problem zu lösen, sind auch schon seit langem Überlegungen bekannt geworden, eine einheitliche Vorrichtung zu schaffen, die auf die jeweils vorhandene Außentemperatur einstellbar ist. Keine der bisher bekanntgewordenen Vorrichtungen hat jedoch Eingang in die Praxis gefunden, da alle Sonderkonstruktionen sind, die von den vielfach bewährten Konstruktionen für Thermostatventile abweichen, einen hohen Herstellungsaufwand erfordern und außerdem keine ausreichende Funktionssicherheit bieten. Beispielsweise ist es bekannt (DE-OS 14 51 669), zwei thermostatische Arbeitselemente vorzusehen, die wechselweise einzeln oder nacheinander zum Einsatz kommen sollten. Dabei wird vorgesehen, daß die relative Lage der beiden thermostatischen Arbeitselemente jeweils für sich oder gemeinsam zu dem Ventilteller verändert wird, was eine Relativbewegung zwischen dem thermostatischen Arbeitselementen und dem Ventilteller notwendig macht. Abgesehen von dem hohen Auf-

0139951

wand führt diese Vorrichtung zu dem Problem, daß eine Gleitführung zwischen dem Ventilteller und den thermostatischen Arbeitselementen vorgesehen werden muß, die sehr störanfällig ist und bei der die Dichtheit über eine längere Betriebszeit nur schwer zu gewährleisten ist.

Gemäß einem älteren Vorschlag (Patentanmeldung P 32 26 104.7) wird vorgesehen, daß die Position des Widerlagers derart veränderbar ist, daß es Abstützpunkte für den Arbeitskolben bildet, deren Abstand zu dem Gehäuse mit dem Ventilteller einstellbar ist. Diese Vorrichtung erfordert keine grundsätzliche Veränderung der in der Praxis vielfach bewährten Ventilkonstruktion. Darüber hinaus ist es möglich, mit dieser Vorrichtung nicht nur eine von der Außentemperatur abhängige Regelung vorzunehmen, sondern auch andere Führungsgrößen für die Regelung einzusetzen, um die Betriebstemperatur des Motors einzuregeln, beispielsweise die Abgastemperatur, die Drehzahl und/oder das Drehmoment des Motors, den Unterdruck im Saugrohr, die Druckdifferenz an eine Unterdruckdose, die Öltemperatur o.dgl. Praktische Versuche mit dieser Vorrichtung sind sehr erfolgreich verlaufen.

Der Erfindung liegt die Aufgabe zugrunde, eine Vorrichtung der eingangs genannten Art so auszubilden, daß eine Veränderung der Ventilcharakteristik möglich ist, wobei der notwendige Aufwand so gering wie möglich gehalten werden soll.

Diese Aufgabe wird dadurch gelöst, daß der Arbeitskolben und das Widerlager einen Verstellmechanismus bilden, und daß ein den Arbeitskolben zwangsweise in eine eingeregelte Position überführendes Stellglied an den Arbeitskolben oder das Widerlager angeschlossen ist.

Durch die Erfindung werden alle Vorteile des älteren Vorschlages in gleicher Weise verwirklicht, wobei jedoch der Herstellungsaufwand durch den aus Arbeitskolben und Widerlager gebildeten Verstellmechanismus wesentlich verringert worden ist und der Arbeitskolben zwangsweise in seine eingeregelte Position überführt wird, ohne daß er dem davon unabhängig verstellten Widerlager nach
laufen muß. Dem Arbeitskolben wird dabei eine zusätzliche Funktion übertragen, nämlich die Funktion als Bestandteil des Verstellmechanismus.

In weiterer Ausgestaltung der Erfindung wird vorgesehen, daß
der Arbeitskolben mit einem Außengewinde in das mit einem entsprechenden Innengewinde versehene Widerlager eingeschraubt ist,
und daß ein einen Drehantrieb aufweisendes Stellglied an den Arbeitskolben oder das Widerlager angeschlossen ist. Der Verstellmechanismus besteht somit nur aus dem Arbeitskolben und dem Widerlager, wobei das Stellglied direkt an eines der beiden Teile angreift. Der Bauaufwand ist damit relativ gering.

Bei einer ersten Ausführungsform wird vorgesehen, daß der Arbeitskolben mit dem Stellglied über eine Drehbewegungen übertragende
Kupplung verbunden ist und daß das Widerlager stationär angeordnet
ist. In einfacher Weise kann dabei vorgesehen werden, daß als Widerlager eine Gewindebohrung eines Anschlußstutzens dient.

Bei einer anderen Ausführungsform der Erfindung wird vorgesehen,
daß der Arbeitskolben in einer Drehsicherung gehalten ist, und daß
das Widerlager als eine von dem Stellglied angetriebene in axialer
Richtung gesicherte Mutter ausgebildet ist.

Bei einer weiteren Ausführungsform der Erfindung wird vorgesehen,
daß der Arbeitskolben mit einer axialen Verzahnung versehen ist,
in die ein als Widerlager dienendes Ritzel eingreift, das an das
Stellglied angeschlossen ist.

In allen Fällen können als Stellglieder einfache kleine Elektromotoren vorgesehen werden, beispielsweise Gleichstrommotoren oder
auch Schrittmotoren, mit denen Zwischenstellungen eingeregelt werden können. Selbstverständlich ist es auch möglich, hydraulisch
oder pneumatisch arbeitende Stellglieder einzusetzen.

In weiterer Ausgestaltung der Erfindung wird vorgesehen, daß ein
Anschlußstutzen mit dem Thermostatventil, dem Widerlager und dem Stellglied als eine Baueinheit ausgebildet ist. Dadurch wird es möglich, die gesamte Vorrichtung vor einer Montage in dem Herstellerwerk auf ihre Funktionsfähigkeit zu prüfen und auf den Bereich der gewünschten Öffnungstemperatur einzujustieren. Diese Vorrichtung wird dann als Baueinheit in den Kühlwasserkreislauf eines Verbrennungsmotors eingebaut.

Weitere Vorteile und Merkmale der Erfindung ergeben sich aus der nachfolgenden Beschreibung der in der Zeichnung dargestellten Ausführungsformen.

Fig. 1    zeigt einen Schnitt durch eine erfindungsgemäße Vorrichtung mit einem in eine Gewindebohrung eines An - schlußstutzens eingeschraubten Arbeitskolben und einem daran anschließenden Stellglied,

Fig. 2    einen Teilschnitt einer Vorrichtung ähnlich Fig. 1, bei welcher das Stellglied das als Mutter ausgebildete Widerlager für den Arbeitskolben antreibt und

Fig. 3    einen Teilschnitt durch eine weitere Vorrichtung, bei welcher das Stellglied über ein in eine Verzahnung eingreifendes Ritzel den Arbeitskolben des Thermostatventils antreibt.

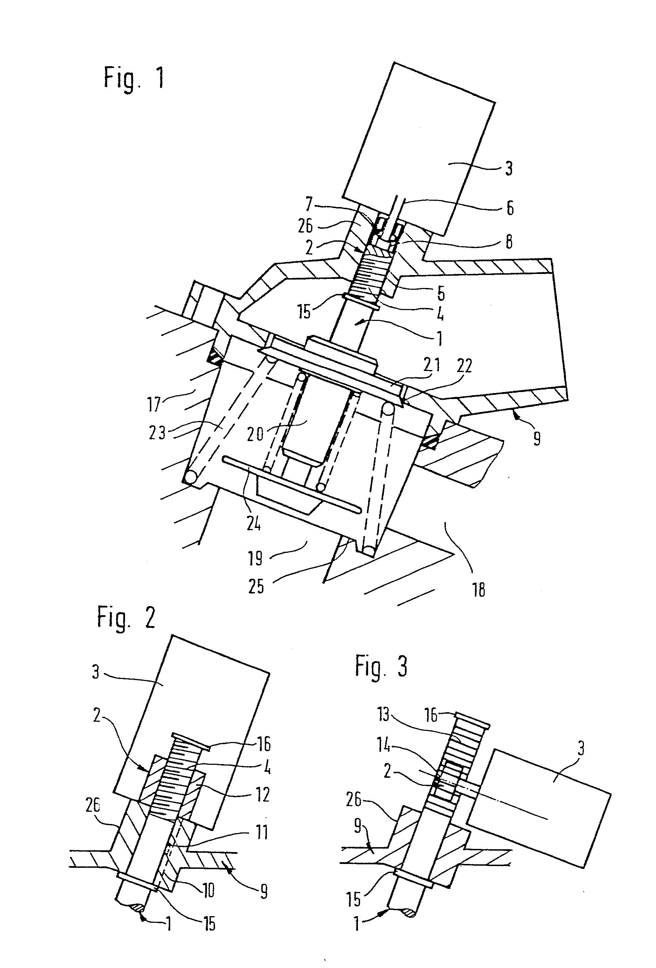

Bei der Ausführungsform nach Fig. 1 ist in einem Gehäuse 17 ein Zulauf 18 für die vom Verbrennungsmotor kommende Kühlflüssigkeit vorgesehen, deren Führung von einem Thermostatventil derart gesteuert wird, daß die Kühlflüssigkeit entweder über einen direkten Rücklauf 19 zum Verbrennungsmotor zurückströmt oder über einen an einen Anschlußstutzen 9 angeschlossenen Wärmetauscher durch diesen hindurch und dann zurück zum Verbrennungsmotor strömt.

Das Thermostatventil enthält ein thermostatisches Arbeitselement, das in einem Gehäuse 20 einen sich bei Erwärmung ausdehnenden

Dehnstoff enthält, der bei einer Ausdehnung einen Arbeitskolben
1 aus dem Gehäuse 20 austreibt. Bei einer Abkühlung verringert
der Dehnstoff wieder sein Volumen, so daß der Arbeitskolben 1
wieder in das Gehäuse 20 hineingedrückt werden kann. Mit dem Gehäuse 20 des thermostatischen Arbeitselementes ist fest ein Ventilteller 21 verbunden, dessen konischem Rand ein Ventilsitz 22
des Anschlußstutzens 9 zugeordnet ist. Das aus dem Ventilteller
21 und dem Ventilsitz 22 gebildete Ventil verschließt oder öffnet
die Verbindung zwischen dem Zulauf 18 und dem zu dem Wärmetauscher führenden Anschlußstutzen. Der Ventilteller 21 ist mit einer
Druckfeder 23 belastet und in seine Schließstellung hineingedrückt.
Die Druckfeder 23 stützt sich bei dem dargestellten Ausführungsbeispiel an einem Vorsprung des Gehäuses 17 ab. In Abwandlung der
dargestellten Ausführungsform kann jedoch ein Federteller mittels
Bügeln an dem Anschlußstutzen 9 angebracht werden, an dem sich
dann die Druckfeder 23 abstützt.

Auf dem dem Ventilteller 21 gegenüberliegenden Bereich des Gehäuses 20 ist ein weiterer Ventilteller 24 in einer Gleitführung
angeordnet, der dem direkten Rücklauf zugeordnet ist. Diesem Ventilteller 24 ist ein Ventilsitz 25 des Gehäuses 17 zugeordnet,
der den direkten Rücklauf 19 umgibt.

Der Arbeitskolben 1 ist an seinem äußeren Ende mit einem Außengewinde 4 versehen, mit welchem er in eine Gewindebohrung 5 des
Anschlußstutzens 9 eingeschraubt ist, die als ein Widerlager 2
dient. An einem Ansatz 26 des Anschlußstutzens 9 ist ein Stellglied 3 befestigt, das mit einer zu Drehungen antreibbaren Spindel 6 mit dem Arbeitskolben 1 gekuppelt ist. Hierzu ist die Spindel 6 mit einem Querstift 7 versehen, der in einer axialen
Schlitzführung 8 des Arbeitskolbens 1 geführt ist, so daß eine
Drehbewegung übertragende Kupplung geschaffen ist. Das Stellglied
3 ist in nicht näher dargestellter Weise an eine Regelung angeschlossen, die abhängig von ein-er wählbaren Führungsgröße die
axiale Position des Arbeitskolbens 1 zwangsweise einstellen kann.
Dies kann beispielsweise in Abhängigkeit von der Außentemperatur
oder aber auch in Abhängigkeit von der Abgastemperatur, der Drehzahl und/oder des Drehmomentes des Verbr-ennungsmotors, dem
Unterdruck im Saugrohr, der Druckdifferenz an einer Unterdruckdose oder der Öltemperatur o.dgl. erfolgen. Durch die Einregelung der axialen Position des Arbeitskolbens 1 kann in gewissen
Grenzen die Betriebstemperatur des Motors verändert werden, so
daß der Betrieb des Verbrennungsmotors nach einem oder mehreren
Kriterien optimiert werden kann.

Bei einem Starten des Verbrennungsmotors und damit ausgelöstem
Umwälzen der Kühlflüssigkeit befindet sich das Thermostatventil
in der dargestellten Position, d.h. die Verbindung von dem Zulauf 18 zu dem Anschlußstutzen 9 und damit dem Wärmetauscher
ist geschlossen, während der direkte Rücklauf 19 offen ist. Die
Kühlflüssigkeit umströmt dabei das Gehäuse 20 des thermostatischen Arbeitselementes. Der in dem Gehäuse 20 enthaltene Dehnstoff ist dabei zweckmäßigerweise so ausgelegt, daß er in einem
bestimmten Temperaturbereich, in welchem die Öffnugstemperatur
des Thermostatventils liegen soll, sein Volumen möglichst linear
mit zunehmender Temperatur vergrößert und umgekehrt verringert.
Das dem Dehnstoff zunächst zur Verfügung stehende Volumen innerhalb des Gehäuses 20 wird durch die axiale Position des Arbeitskolbens 1 bestimmt. Hat er durch seine temperaturabhängige Ausdehnung dieses Volumen ausgefüllt, so ist jede weitere Vergrößerung seines Volumens mit einem entsprechenden linearen Ausfahren
des Arbeitskolbens 1 aus dem Gehäuse 20 verbunden. Da die axiale
Position des Arbeitskolbens 1 festgelegt ist, führt jede weitere
Vergrößerung des Volumens des Dehnstoffes zu einem relativen Verschieben des Gehäuses 20 mit dem Ventilteller 21 gegen die Wirkung
der Druckfeder 23, so daß das von dem Ventilteller 21 und dem Ventilteller 22 gebildete Ventil geöffnet wird. Gleichzeitig wird
mit dem Ausfahren des Arbeitskolbens 1 und dem damit verbundenen
axialen Verschiebens des Gehäuses 20 der Ventilteller 24 dem Ventilsitz 25 zugestellt, so daß das dem direkten Rücklauf 19 zugeordnete Ventil geschlossen wird.

Aus dem Vorstehenden wird ersichtlich, daß die axiale Stellung
des Arbeitskolbens 1 die Ventilcharakteristik bestimmt, d.h. das Öffnen des aus dem Ventilteller 21 und dem Ventilteller 22 gebildeten, zu dem Wärmetauscher führenden Ventils und das Schließen des aus dem Ventilteller 24 und dem Ventilsitz 25 gebildeten, dem direkten Rücklauf 19 zugeordneten Ventils. Durch die Verstellung der axialen Position des Arbeitskolbens 1 kann somit unabhängig von der Temperatur der über den Zulauf 18 zuströmenden Kühlflüssigkeit die Ventilstellung geändert werden. Durch entsprechende Einstellung des Arbeitskolbens 1 über das Stellglied 3 kann somit die Betriebstemperatur durch Verändern der Ventilstellung in gewissen Grenzen eingeregelt werden. Außerdem wird selbstverständlich dadurch die Öffnungstemperatur des aus dem Ventilteller 21 und dem Ventilsitz 22 gebildeten Ventils eingestellt. Der hierfür notwendige Verstellmechanismus, auf den die Spindel 6 des Stellgliedes 3 einwirkt, wird dabei unmittelbar von dem Arbeitskolben 1 und der als Gewindebohrung 5 ausgebildeten Widerlager 2 gebildet, das stationär ist. Zweckmäßigerweise werden die Endstellungen des Arbeitskolbens 1 durch Anschläge gesichert, wozu der Arbeitskolben 1 bei dem Ausführungsbeispiel nach Fig. 1 mit einem Anschlagring 15 versehen ist.

Bei der Ausführungsform nach Fig. 2, bei welcher der Aufbau des Thermostatventils im Prinzip der Ausführungsform nach Fig. 1 entspricht, ist der Arbeitskolben 1 ebenfalls mit einem Außengewinde 4 versehen, auf das eine außerhalb des Anschlußstutzens 9 angeordnete Mutter 12 aufgeschraubt ist, die als Widerlager 2 dient. Die Mutter 12 ist in axialer Richtung gesichert und kann von dem nur angedeuteten Stellglied 3 zu Drehbewegungen angetrieben werden, durch die zwangsweise die axiale Position des Arbeitskolbens 1 eingestellt wird. Die Endstellungen des Arbeitskolbens 1 werden durch Anschlagringe 15 und 16 begrenzt. Bei dieser Ausführungsform muß der Arbeitskolben 1 gegen ein Verdrehen gesichert sein. Dies geschieht bei dem Ausführungsbeispiel nach Fig. 2 dadurch, daß der Arbeitskolben 1 mit einem radialen Nocken 11 in einer axialen Aussparung 10 des Ansatzes 26 des Anschlußstutzens 9 geführt ist.

Auch bei der Ausführungsform nach Fig. 3 ist der Aufbau des

Thermosta-tventils grundsätzlich entsprechend der Ausführungsform nach Fig. 1. Das aus dem Anschlußstutzen 9 herausgeführte Ende des Arbeitskolbens 1 ist mit einer zahnstangenartigen Verzah – nung 13 versehen, in die ein Ritzel 14 eingreift, das von einem Stellglied 3 angetrieben wird. Das Ritzel 14 dient bei dieser Ausführungsform als Widerlager 2 für den Arbeitskolben 1. Auch bei dieser Ausführungsform werden die Endstellungen des Arbeitskolbens 1 durch Anschlagringe 15 und 16 gesichert.

Es ist natürlich auch möglich, als eine Art Umkehrung der Ausführung der Fig. 3 den Verstellantrieb für den Arbeitskolben 1 dadurch zu realisieren, daß das Stellglied 3 als ein Linearmotor mit einer Zahnstange ausgebildet wird, die mit einem Ritzel in Eingriff steht, das die Axialverstellung des Arbeitskolbens 1 bewirkt. Beispielsweise könnte die Mutter 12 der Fig. 2 als dieses Ritzel ausgebildet sein, so daß durch die Drehbewegung der Mutter 12 - wie bei Fig. 2 - die Axialverstellung eintritt.

Patent- und Schutzansprüche
============================

1. Vorrichtung zum Regeln der Temperatur in einem Kühlkreislauf
   eines Verbrennungsmotors, insbesondere eines Kraftfahrzeugmotors, die ein Thermostatventil enthält, das den Kühlmittelfluß von dem Verbrennungsmotor durch einen direkten Rücklauf
   hindurch und/oder einen Wärmetauscher hindurch zurück zum
   Verbrennungsmotor regelt und das ein thermostatisches Arbeitselement enthält, dessen Gehäuse einen Ventilteller eines zu
   dem Wärmetauscher führenden Ventils trägt und dessen bei Erwärmung ausfahrender Arbeitskolben an einem Widerlager abgestützt ist, dadurch gekennzeichnet, daß der Arbeitskolben (1)
   und das Widerlager (2) einen Verstellmechanismus bilden, und
   daß ein den Arbeitskolben (1) zwangsweise in eine eingeregelte
   Position überführendes Stellglied (3) an den Arbeitskolben (1)
   oder das Widerlager (2) angeschlossen ist.

2. Vorrichtung nach Anspruch 1, dadurch gekennzeichnet, daß der
   Arbeitskolben (1) mit einem Außengewinde (4) in das mit einem
   entsprechenden Innengewinde (5) versehene Widerlager (2) eingeschraubt ist, und daß ein einen Drehantrieb aufweisendes
   Stellglied (3) an den Arbeitskolben (1) oder das Widerlager
   (2) angeschlossen ist.

3. Vorrichtung nach Anspruch 2, dadurch gekennzeichnet, daß der Arbeitskolben (1) mit dem Stellglied (3) über eine Drehbewegungen übertragende Kupplung (6, 7, 8) verbunden ist und daß das Widerlager (2) stationär angeordnet ist.

4. Vorrichtung nach Anspruch 3, dadurch gekennzeichnet, daß als Widerlager (2) eine Gewindebohrung (5) eines Anschlußstutzens (9) dient.

5. Vorrichtung nach Anspruch 2, dadurch gekennzeichnet, daß der Arbeitskolben (1) in einer Drehsicherung (10, 11) gehalten ist, und daß das Widerlager (2) als eine von dem Stellglied (3) angetriebene, in axialer Richtung gesicherte Mutter (12) ausgebildet ist.

6. Vorrichtung nach Anspruch 1, dadurch gekennzeichnet, daß der Arbeitskolben (1) mit einer axialen Verzahnung (13) versehen ist, in die ein als Widerlager (2) dienendes Ritzel (14) eingreift, das an das Stellglied (3) angeschlossen ist.

7. Vorrichtung nach einem der Ansprüche 1 bis 6, dadurch gekennzeichnet, daß eine oder beide der möglichen Endstellungen des Arbeitskolbens (1) durch Anschläge (15, 16) begrenzt sind.

8. Vorrichtung insbesondere nach Anspruch 1 und einem oder mehreren der Ansprüche 2 bis 7, dadurch gekennzeichnet, daß ein Anschlußstutzen (9) mit dem Thermostatventil, dem Widerlager (2) und dem Stellglied (3) als eine Baueinheit ausgebildet ist.

Fig. 1

Fig. 2

Fig. 3

## EINSCHLÄGIGE DOKUMENTE

| Kategorie | Kennzeichnung des Dokuments mit Angabe. soweit erforderlich. der maßgeblichen Teile | Betrifft Anspruch | KLASSIFIKATION DER ANMELDUNG (Int Cl 4) |
|---|---|---|---|
| Y,D | DE-A-3 226 104 (BEHR-THOMPSON) * Seiten 2,3; Ansprüche 1-11 * | 1 | F 01 P 7/16 G 05 D 23/19 H 02 K 7/06 |
| Y | US-A-4 398 109 (KUWAKO) * Spalten 3,4 * | 1 | |
| A | | 2-4,7 | |
| A | GB-A-1 027 600 (KORTHAUS) * Seite 2, Zeilen 63-98 * | 5 | |
| A | FR-A-2 475 249 (MERCIER) * Seite 1, Zeilen 25-36 * | 1,6,7 | |
| A | JP-A-58 002 419 (FUJI) | | RECHERCHIERTE SACHGEBIETE (Int. Cl.4) |
| A | DE-C- 662 977 (SANDVOSS) | | F 01 P G 05 D H 02 K |
| | ----- | | |

Der vorliegende Recherchenbericht wurde für alle Patentansprüche erstellt.

| Recherchenort DEN HAAG | Abschlußdatum der Recherche 14-12-1984 | Prüfer WASSENAAR G. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03.82